# EUROPÄISCHE PATENTSCHRIFT

(11) **EP 1 701 270 B1**
(45) Veröffentlichungstag und Bekanntmachung des Hinweises auf die Patenterteilung: **12.11.2014**
(21) Anmeldenummer: 06003759.5
(22) Anmeldetag: 24.02.2006
(51) Int. Cl.: G06F 13/38, H04L 12/46

(54) **Kopplung von sicheren Feldbussystemen**
Interconnection of safety fieldbus systems
Interconnexion des systèmes de bus de terrain de sécurité

(30) Priorität: 07.03.2005 DE 102005010820
(43) Veröffentlichungstag der Anmeldung: 13.09.2006
(73) Patentinhaber: Phoenix Contact GmbH & Co. KG, 32825 Blomberg (DE)
(72) Erfinder: Esch, Rainer, 32825 Blomberg (DE); Landwehr, Heinz-Carsten, 32657 Lemgo (DE)
(74) Vertreter: Blumbach Zinngrebe

(56) Entgegenhaltungen:
- EP-A- 1 367 851
- MARCOS M ET AL: "ON THE DESIGN AND DEVELOPMENT OF A GATEWAY BETWEEN MAP-MMS AND PROFIBUS/FMS" PROCEEDINGS IEEE INTERNATIONAL WORKSHOP ON FACTORY COMMUNICATION SYSTEMS, 1997, Seiten 349-353, XP000995489
- LV YONG ET AL: "Fieldbus interoperation technologies" INTELLIGENT CONTROL AND AUTOMATION, 2004. WCICA 2004. FIFTH WORLD CONGRESS ON HANGZHOU, CHINA 15-19 JUNE 2004, PISCATAWAY, NJ, USA,IEEE, US, Bd. 4, 15. Juni 2004 (2004-06-15), Seiten 3620-3623, XP010730916 ISBN: 0-7803-8273-0

## Beschreibung

Die Erfindung betrifft ein Verfahren und eine zur Durchführung des Verfahrens ausgebildete Vorrichtung zur Kopplung von wenigstens (Feld-)Bus-/Netzwerksystemen mit unterschiedlichen Sicherheitsmechanismen zum Verarbeiten sicherheitsrelevanter oder -kritischer Daten.

Im Rahmen der Erfindung werden unter sicherheitsrelevanten und -kritischen Daten, in der nachfolgend Beschreibung und den Ansprüchen allg. als Sicherheitsdaten bezeichnet, Daten verstanden, die zur Steuerung von sicherheitsrelevanten oder -kritischen (Teil-)Prozessen relevant bzw. kritisch sind, von denen bei Auftreten eines Fehlers eine nicht zu vernachlässigende Gefahr für Menschen und/oder auch materielle Güter ausgeht und also der Prozess, ein mit diesem Prozess gekoppelter Folgeprozess und/oder ein diesen Prozess umfassendes System in einen sicheren Zustand überführt werden muss.

Beispiele für derartige Prozesse sind chemische Verfahren, bei denen kritische Parameter unbedingt in einem vorgegebenen Bereich gehalten werden müssen, komplexe Maschinensteuerungen, wie etwa bei einer hydraulischen Presse oder einer Fertigungsstraße, bei welchen beispielsweise das Inbetriebnehmen eines Press-/Schneidwerkzeuges einen sicherheitsrelevanten Teilprozess darstellen kann. Weitere Beispiele für sicherheitsrelevante (Teil-) Prozesse sind die Überwachung von Schutzgittern, Schutztüren oder Lichtschranken, die Steuerung von Zweihandschaltern oder auch die Reaktion auf Notausschalter.

Somit ist es unbedingt erforderlich, dass die jeweils zugehörigen, erzeugten oder erfassten bzw. gemessenen, Sicherheitsdaten ohne irgendeine Verfälschung zeitnah transportiert werden.

Um den Sicherheitsanforderungen gerecht zu werden, hat es in den letzten Jahren zahlreiche Vereinbarungen gegeben, die einen nahezu fehlerfreien Datentransport beim Einsatz von Bussystemen fordern. Diese betreffen insbesondere den Datentransport selbst sowie eine zulässige Restfehlerwahrscheinlichkeit in Abhängigkeit der jeweiligen Anwendung bzw. des jeweiligen Prozesses. Als einschlägige Standards sind hierbei insbesondere die EN 61508 und die EN 954-1 zu nennen sowie GS-ET-26 betreffend die Grundsätze für die Prüfung und Zertifizierung von "Bussystemen für die Übertragung sicherheitsrelevanter Nachrichten" der Prüf-und Zertifizierungsstelle der gewerblichen Berufsgenossenschaften.

Entsprechend dieser Vereinbarungen und Normen sind für einzelne Bus-/Netzwerksysteme jeweils spezifische Sicherheitsmechanismen entwickelt worden, um Sicherheitsdaten mit hoher Redundanz zu übertragen. Mögliche Fehler werden rechtzeitig entdeckt und eine Gefährdung kann abgewendet werden. Beispiele hierfür sind unter anderem der Safety Bus P, Profibus F, Interbus Safety, CAN Safety u.a.

Diese hierbei insbesondere im Rahmen der Steuerungs- und Automatisierungstechnik entwickelten spezifischen Sicherheitsmechanismen ermöglichen somit eine einfache und kostengünstige Nachrüstung der jeweils bereits existierenden, zwischen einzelnen an einem Prozess beteiligten Einheiten zur Datenkommunikation eingesetzten (Feld-)Bus-/Netzwerksysteme zur Übertragung von Sicherheitsdaten, insbesondere zwischen Sensoren, Aktoren und/oder Steuerungseinrichtungen.

Die EP 1 188 096 B1 offenbart beispielsweise ein Steuerungssystem für einen sicherheitsrelevanten Prozess mit einem Feldbus, über den eine Steuereinheit zum Steuern des sicherheitsrelevanten Prozesses und eine Signaleinheit, die über E/A-Kanäle mit dem sicherheitsrelevanten Prozess verknüpft ist, verbunden sind. Um eine fehlersichere Kommunikation miteinander zu gewährleisten weisen diese Einheiten sicherheitsbezogene Einrichtungen auf, durch welche an sich nicht sichere Einheiten zu sicheren Einheiten werden sollen. Im Einzelnen ist eine durch Rechner realisierte mehrkanalige Verarbeitungsstruktur vorgesehen, wobei ein Fehler in einem Verarbeitungskanal anhand eines Ergebnisses, welches von demjenigen eines anderen redundanten Verarbeitungskanals abweicht, erkannt und gegebenenfalls korrigiert werden kann.

Unter dem allgemeinen Begriff Rechner sind nachfolgend im Wesentlichen jede Art von Datenverarbeitungseinrichtungen wie Mikro-Computer, Mikro-Prozessoren, Mikro-Controller oder auch PC's, zu verstehen.

Auch die WO 01/15385 A2 betrifft die Steuerung sicherheitsrelevanter Prozesse unter Verwendung eines (Feld-) Bussystems basierend auf einem Sicherheitsmechanismus, bei welchem die an der Steuerung des sicherheitsrelevanten Prozesses beteiligten Einheiten wiederum in der Regel redundant aufgebaute Verarbeitungskanäle aufweisen. Jeder der redundanten Kanäle umfasst einen Rechner, die sich gegenseitig kontrollieren. Diese mehrkanalige Struktur wird über einen weiteren mit dem Feldbus verbunden Rechner in eine einkanalige Struktur überführt.

Der WO 01/15391 A1 und der Offenlegungsschrift DE 199 39 567 A1 sind weitere Beispiele sicherer Busteilnehmer zu entnehmen. Vorgesehen ist ein Sicherheitsmechanismus mit sich gegenseitig hinsichtlich einer sicheren Protokollerstellung kontrollierenden, redundant ausgeführten Verarbeitungskanälen und/oder Rechnern und ein anschließender Übergang von der Zweikanaligkeit zur Einkanaligkeit über einen weiteren an den Bus gekoppelten Rechner, der an einen Protokoll-Chip angeschlossen ist oder diesen integriert hat.

Die eine weitere Einrichtung zur einkanaligen Übertragung von mittels zwei redundanten Rechnern gebildeten Daten betreffende Patentschrift DE 195 32 639 C2 integriert, um den Schaltungsaufwand zu verringern, die Funktion der Busankopplung in einen der beiden redundant ausgeführten Rechner.

Ferner beschreibt die DE 100 65 907 A1 einen auf dem Prinzip einer "Redundanz mit Kreuzvergleich" beruhenden Sicherheitsmechanismus zum gesicherten Datentransport für die Datenübertragung an parallelen oder seriellen Netzwerken oder Busen, wobei ein Zwischenregister mit zwei logisch identischen Datenbereichen für den Übergang von der Zweikanaligkeit zur Einkanaligkeit verwendet wird.

Basierend auf dem Übergang von der Mehrkanaligkeit zur Einkanaligkeit betrifft die vom Anmelder der vorliegenden Erfindung am 17. August 2004 eingereichte deutsche Anmeldung mit dem Aktenzeichen DE 10 2004 039932.8 einen weiteren Weg einer sicheren Busankopplung von sicherheitsrelevanten Prozessen, wobei eine Rückwirkungsfreiheit und Unabhängigkeit bei der Erstellung eines sicherheitsgerichteten Protokolls sichergestellt wird. Die Anmeldung mit dem Aktenzeichen DE 10 2004 039932.8 sieht hierbei zur einkanaligen Busankopplung eines sicherheitskritischen Prozesses ein Verfahren vor, bei welchem ein für den sicherheitskritischen Prozess relevanter Datensatz über zumindest zwei redundante Verarbeitungskanäle nach identischen Gesetzmäßigkeiten zu jeweils einem sicherheitsgerichteten Protokoll verarbeitet wird und die redundanten sicherheitsgerichteten Protokolle zur einkanaligen Busankopplung wieder zu einem gemeinsamen sicherheitsgerichteten Protokoll zusammengesetzt werden, und zwar, indem von jedem der Verarbeitungskanäle auf ein gemeinsames Zwischenregister zugegriffen wird, wobei für jede Registerstelle eine Schreibberechtigung nur einmal vergeben wird, derart dass das gemeinsame sicherheitsgerichtete Protokoll, also das zu übertragende Sicherheitstelegramm, anteilig durch Einschreiben jeweils unterschiedlicher Anteile der jeweiligen sicherheitsgerichteten Protokolle zusammengesetzt wird.

Eine Aufgabe der vorliegenden Erfindung besteht darin, einen Weg zur Kopplung verschiedenster Feldbus- oder Netzwerksysteme mit jeweils eigenen Sicherungsmechanismen derart bereitzustellen, dass die Übertragung von Sicherheitsdaten zwischen wenigstens zwei Bus-/Netzwerksystemem mit unterschiedlichen Sicherungsmechanismen gewährleistet wird.

Marcos M. et al. beschreiben 1997 in der Reihe PROCEEDINGS IEEE unter der Nummer XP-000995489 auf den Seiten 349 bis 353 in dem Aufsatz "On the Design and Development of a Gateway between MAP-MMS and PROFIBUS/FMS" ein Verfahren, welches die Kopplung der zwei unterschiedlichen properitären Feldbus-/Netzwerksysteme SINEC H1 und SINEC L2 sowie die transparente Datenübertragung zwischen beiden Feldbus-/Netzwerksystemen ermöglicht, wobei SINEC Hl als auch SINEC L2 einschließlich ab der fünften Schicht des OSI-Referenzmodells die selben properitären Protokolle SINEC AP (Automation Protocol) und SINEC TF (Technological Functions) einsetzen. Da die Funktionsweise eines in diesem Stand der Technik zu Durchführung des Verfahrens beschriebenen Gateways auf dieser Gemeinsamkeit der beiden Feldbus-/Netzwerksysteme, speziell auf dem Protokoll SINEC TF mit seiner Funktions-Bibliothek, und dem Konzept des Virtual Manufactoring Device (VMD), basiert, lässt sich das Gateway nicht zur Kopplung von anderen unterschiedlichen Feldbus-/Netzwerksystemen mit jeweils unterschiedlichen, insbesondere jeweils properitären Übertragungsmechanismen/- protokollen anwenden, wobei darüber hinaus dem Stand der Technik kein Hinweis zu entnehmen ist, dass dass Gateway auch Sicherheitsdaten zwischen dem Netzwerksystem SINEC H1 und dem Feldbussystem SINEC L2 sicher überträgt und also irgendwelche Sicherheitsmechanismen verwendet. Hierauf basierend wird in diesem Stand der Technik ferner ausgeführt, dass das aktuelle Ziel die Entwicklung eines Gateway zur Kopplung der zwei unterschiedlichen properitären Feldbus-/Netzwerksysteme SINEC Hl-MAP/MMS und Profibus/SINEC L2-FMS sei, Zwar wird keine derartige Implementierung eines Gateway beschrieben, jedoch wäre eine solche Gateway-Implementierung ebenso wie die beschriebene Gateway-Implementierung für SINEC H1-TF und SINEC L2-TF für eine wie auch immer geartete direkte Umsetzung zwischen zwei speziellen Feldbus- bzw. Netzwerksystemen ausgebildet. Die erfindungsgemäße Lösung ist auf höchst überraschende Weise bereits durch einen Gegenstand mit den Merkmalen eines der anhängenden unabhängigen Ansprüche gegeben.

Vorteilhafte und/oder bevorzugte Ausführungsformen und Weiterbildungen sind Gegenstand der jeweiligen abhängigen Ansprüche.

Erfindungsgemäß ist somit zur Kopplung von wenigstens zwei (Feld-)Bus-/Netzwerksystemen mit jeweils unterschiedlichen Sicherheitsmechanismen, insbesondere jeweils properitären Sicherheitsmechanismen, vorgesehen, zwischen den unterschiedlichen Systembasierten Sicherheitsmechanismen zu übertragene Sicherheitsdaten unter zusätzlicher Nutzung einer definierten, jedoch Systemunabhängigen sicheren Datenstruktur zu verarbeiten.

Eine erfindungsgemäße Vorrichtung zur Kopplung von wenigstens zwei (Feld-)Bus-/Netzwerksystemen, welche jeweils unterschiedliche Sicherheitsmechanismen, insbesondere jeweils properitäre Sicherheitsmechanismen, zum Umsetzen von Sicherheitsdaten in eine Systemabhängige sichere Datenstruktur und/oder umgekehrt aufweisen, umfasst hierzu wenigstens ein erstes und ein zweites sicherheitsgerichtetes Datenverarbeitungsmodul zum Verarbeiten von zwischen den unterschiedlichen Systembasierten Sicherheitsmechanismen zu übertragenen Sicherheitsdaten unter Anwendung einer definierten, jedoch Systemunabhängigen sicheren Datenstruktur.

Ein wesentlicher Vorteil der Erfindung ist folglich darin zu sehen, dass auf einfache Weise eine von jeglichem (Feld-)Bus-/Netzwerksystem unabhängige und somit im Wesentlichen lokale sichere Kommunikationsbeziehung zwischen verschiedensten (Feld-)Bus-/Netzwerksystemen aufbaubar ist und eine direkte Umsetzung zwischen zwei unterschiedlichen Sicherheitsmechanismen verschiedener (Feld-)Bus-/Netzwerksysteme mit den dafür jeweils notwendigen unterschiedlich anzupassenden sicheren Umsetzungsmechanismen umgangen wird. Somit können hierdurch erstmalig auch (Feld-)Bus-/Netzwerksystemen mit jeweils properitären Sicherheitsmechanismen gekoppelt werden.

Als "properitär" im Sinne der Erfindung wird hierbei sowie nachfolgend und in den Ansprüchen allgemein Hardware oder Software bezeichnet, die nur auf einem System verwendbar ist und nicht kompatibel zu anderer artverwandten Hard-oder Software ist.

Zweckmäßiger Weise ist hierzu vorgesehen dass jedes der Datenverarbeitungsmodule mit einem der systembasierten Sicherungsmechanismus gekoppelt ist, wobei zumindest wenigstens ein Datenverarbeitungsmodul zum Umsetzen von zu übertragenen ein- oder mehrkanalig vorliegenden Sicherheitsdaten in die definierte, jedoch Systemunabhängigen sichere Datenstruktur ausgebildet ist und zumindest ein anderes Datenverarbeitungsmodul zum sicherheitsgerichteten Auswerten der Systemunabhängigen sicheren Datenstruktur zum Bereitstellen von ein- oder mehrkanalig vorliegenden Sicherheitsdaten ausgebildet ist.

Bevorzugt ist jedes Datenverarbeitungsmodul zum Umsetzen in beide Kopplungsrichtungen ausgebildet, können in äußerst flexibler und vielseitig verwendbarer Weise zwischen den Systemen zu übertragene Sicherheitsdaten vor deren Übertragung in der definierten, jedoch Systemunabhängigen sicheren Datenstruktur aus einer mehrkanalig oder einkanalig vorliegenden Systemabhängigen sicheren Datenstruktur umgesetzt und/oder zu übertragene Sicherheitsdaten nach deren Übertragung in der definierten, jedoch Systemunabhängigen sicheren Datenstruktur in eine mehrkanalige oder einkanalige Systemabhängige sichere Datenstruktur umgesetzt werden.

Insbesondere sieht die Erfindung vor, dass eine jeweils von einer sicheren in eine andere sichere umzusetzende Datenstruktur in Vorteilhafter Weise zunächst sicherheitsgerichtet ausgewertet wird und ein nach Auswertung ein- oder mehrkanalig vorliegender, ausgewertete "Rohdaten" umfassender Datensatz in die jeweils andere sichere Datenstruktur umgesetzt wird. Die sicheren Datenverarbeitungsmodule sind somit im Wesentlichen von jeglichen systemabhängigen Sicherungserfordernissen entbunden.

In besonders bevorzugter Ausführung werden die unter zusätzlicher Nutzung einer definierten, jedoch Systemunabhängigen sicheren Datenstruktur verarbeiteten Sicherheitsdaten innerhalb einer an einem zu steuernden Prozess beteiligten Einheit eines der zu koppelnden Systeme übertragen, und zwar zwischen einer für diesen Prozess relevante Sicherheitsdaten verarbeitenden sicherheitsbezogenen Einrichtung der Einheit und wenigstens einem (Feld-)Bus-/Netzwerkanschluss der Einheit. Hierzu sind die Datenverarbeitungsmodule zweckmäßiger Weise in der an dem zu steuernden Prozess beteiligten Einheit derart integriert, dass wenigstens eine der wenigstens zwei Datenverarbeitungsmodule in der sicherheitsbezogenen Einrichtung und wenigstens eine andere der Datenverarbeitungsmodule mit dem (Feld-)Bus-/Netzwerkanschluss integriert ist.

Eine besonders bevorzugte Ausführungsform sieht vor, dass ein ein- oder mehrkanalig vorliegender Satz von Ein-/Ausgangsdaten des zu steuernden Prozesses in die definierte, jedoch Systemunabhängige sichere Datenstruktur umgesetzt wird oder durch Auswertung des definierten, jedoch Systemunabhängigen sicheren Datenstruktur aus dieser gewonnen wird. Hierzu ist zweckmäßiger Weise wenigstens eine in der sicherheitsbezogenen Einrichtung integrierte Datenverarbeitungsmodul zum Umsetzen von, einen ein- oder mehrkanalig vorliegenden Satz von Ein-/Ausgangsdaten umfassendenden Sicherheitsdaten des zu steuernden Prozesses in die definierte, jedoch Systemunabhängige sichere Datenstruktur und/oder zum Auswerten des definierten, jedoch Systemunabhängigen sicheren Datenstruktur zum ein-oder mehrkanaligen Bereitstellen von einen Satz von Ein-/Ausgangsdaten umfassendenden Sicherheitsdaten ausgebildet.

Die Einheit kann hierzu eine Teilnehmereinheit sein, welche wenigstens einen ein- oder mehrkanaligen Ein- und/oder Ausgang zur Anbindung eines zu steuernden Prozesses umfasst, so dass auch sichere Ein- /Ausgänge zu einem sicherheitsrelevanten Prozess unter Anwendung der Erfindung eingebunden werden können. Werden über die sicherheitsbezogene Einrichtung sichere Ein-/Ausgänge eingebunden können diese Sicherheitseingangsdaten bereits als "Rohdaten" vorliegen. Die Einheit kann jedoch auch eine Steuerungseinheit sein, welche z.B. zu verarbeitende Sicherheitsdaten generiert. Somit ist folglich ferner von Vorteil, dass die Einbindung von sowohl Bus-/Netzwerk basierten als auch von auf lokalen Ein-/Ausgängen basierten Sicherheitsdaten in die erfindungsgemäße Kopplung von unterschiedlichen Sicherungsmechanismen gewährleistet wird.

Im Wesentlichen jede bestehende Busteilnehmereinheit oder Bussteuereinheit ist somit bereits durch geringfügige Modifikation für die erfindungsgemäße äußerst flexible Kopplung unterschiedlicher Systeme anpassbar und kann somit mit auch integrierter Gateway-Funktionalität bereitgestellt werden. Solche zur Durchführung des Verfahrens erfindungsgemäß ausgebildete Einheiten umfassen applikationsspezifisch auch modulare, z.B. INLINE aufgebaute, Einheiten und der Bus-/Netzwerkanschluss ist folglich auch in einer von der Einheit umfassten INLINE-Station integrierbar.

Durch die Verlagerung des jeweiligen properitären Kommunikationssystems zur sicheren Datenübertragung aus der sicherheitsbezogenen Einrichtung heraus ergibt sich der weitere Vorteil einer wesentlich höheren Performance, da die sicherheitsbezogene Einrichtung nicht bzw. nur geringfügig mit diesen Kommunikationsaufgaben belastet wird, welches sich z.B. ferner positiv auf Laufzeiten für TCP/IP-Stack oder Profinet auswirkt.

Die Umsetzung in die Systemunabhängig sicheren Datenstrukturen erfolgt vorzugsweise abgesichert für ein einkanalige Übertragung, bevorzugt gemäß der in der DE 10 2004 039932.8 offenbarten Sicherungsfunktionalität, wobei für die Übertragung derartiger Systemunabhängig abgesicherter Datenstrukturen zwischen jeweiligen Datenverarbeitungsmodulen somit in zweckmäßiger und kostensparender Weise auch nicht sichere, im Wesentlichen beliebige Hardware-Strukturen, z.B. Mikroprozessoren wie USC4, serielle Busse wie I²C oder SPI und/oder mehrere Koppelspeicher oder Zwischenregister z.B. in Form vom DPMs (Dual Port Memory), innerhalb der Einheit verwendet werden.

Zur Absicherung der Systemunabhängig sicheren Datenstrukturen umfassen die Datenverarbeitungsmodule folglich bevorzugt wenigstens zwei redundante, zusammenwirkende Moduleinheiten, wobei die Moduleinheiten Ausgangsseitig mit einer nicht-sicheren Kopplungskomponente zur Übergabe einer gemeinsam Systemunabhängig abgesicherten Datenstruktur an diese Kopplungskomponente gekoppelt sind und/oder Eingangsseitig mit einer nicht-sicheren Kopplungskomponente zur sicherheitsgerichteten Auslesen einer Systemunabhängig abgesicherten Datenstruktur aus diese Kopplungskomponente gekoppelt sind.

Um den Sicherungsanforderungen zu genügen wird die interne Kommunikationsverbindung über eine in weiterer bevorzugter Ausbildung einkanalig auf einer sicheren Steuerung einer an einem sicherheitskritischen Prozess beteiligten Einheit befindliche, nicht sichere Komponente und die danach gelagerten Einheiten mittels in der IEC 61508 gelisteten Sicherungsmechanismen für veränderliche Speicherbereiche und Kommunikationsschnittstellen gemäß SIL 3, also insbesondere durch CRC, zeitliche Erwartungshaltungen bzw. Timeout- Mechanismen abgesichert.

Die Erfindung ermöglicht somit auf einfache Weise eine sicherheitsbasierte Integration von spezifischen sicherheitsbezogenen Einrichtungen, z.B. einer sicheren Interbus-Steuerung auch in Einheiten mit anderen (Feld-)Bus-/Netzwerkschnittstellen. Auch die Bereitstellung einer erfindungsgemäß ausgebildeten Einheit mit integrierter sicherer Gateway-Funktionalitat zu verschiedenen Netzwerk Systemen liegt im Rahmen der Erfindung.

Die Datenverarbeitungsmodule können applikationsspezisch Hardware und/oder Software umfassen, so dass diese in auf unterschiedlichsten Systemen basierenden Einheiten bereits bei nur geringfügiger Modifikation bereits eingesetzter Kommunikationsfirmware und im Wesentlichen ohne Modifikation von Hardwarestrukturen integrierbar sind.

Die Erfindung ermöglicht somit allgemein die Kopplung von Einheiten mit einer bestimmten sicherheitsbezogenen Einrichtung an andere sicherheitsbezogene Kommunikationssysteme, wobei auch bei entsprechender Modifikation auf bewährte Techniken und Verfahren wirksam zurückgegriffen werden kann, so dass ein hoher Widerverwendungsgrad und eine hohe Modularität sichergestellt ist. So kann z.B. eine Einheit mit einer auf dem INTERBUS basierenden sicherheitsbezogenen Einrichtung, beispielsweise einer als Aufsteckboard oder im Layout integrierten sicheren Steuerung einer an einem sicherheitskritischen Prozess beteiligten Einheit, an andere sicherheitsbezogene Kommunikationssysteme, wie z.B. CAN SAFETY, PROFISAFE u.a. gekoppelt werden.

Die Erfindung umfasst daher ferner eine rechnerauslesbares Medium mit darauf gespeicherten Informationen, die, ausgelesen durch einen Rechner, insbesondere durch einen Rechner einer an einem zu steuernden Prozess beteiligten Bus- oder Netzzwerkeinheit, zur Durchführen des erfindungsgemäßen Verfahrens mit diesem Zusammenwirken.

Die Erfindung wird nachfolgend anhand bevorzugter Ausführungsbeispiele unter Bezugnahme auf die beigefügten Zeichnungen näher beschrieben. In den Zeichnungen zeigen:

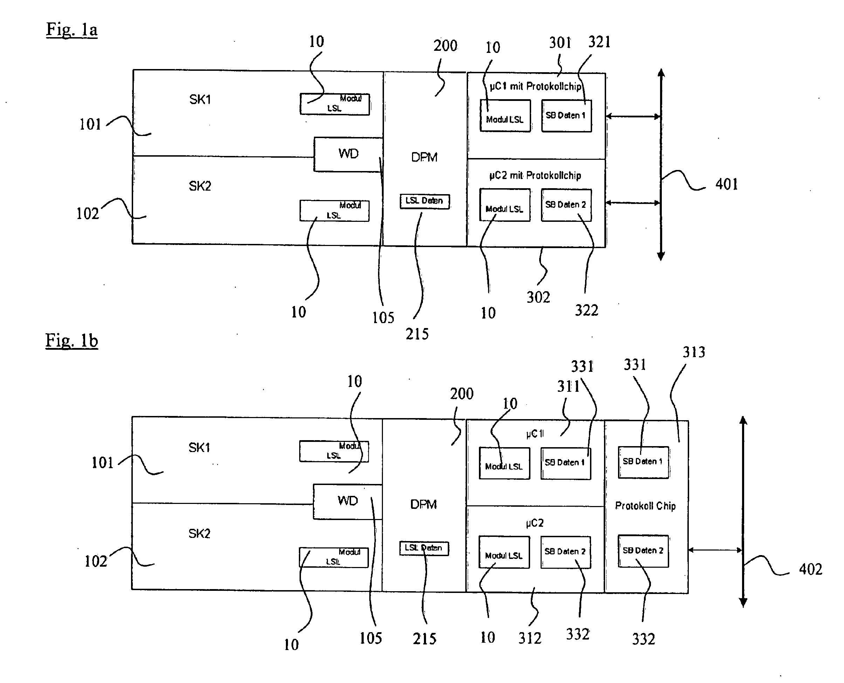

- Fig. 1a u. 1b: zwei stark vereinfachte Funktionsschaltbilder, jeweils einer direkten Adaption einer 2-kanaligen Hardwarestruktur einer sicherheitsbezogen Einrichtung einer an einem zu steuernden Prozess beteiligten Einheit zu einem Feldbusanschluss für einen Feldbus mit anderem sicherheitsgerichtetem Mechanismus nach der Erfindung,

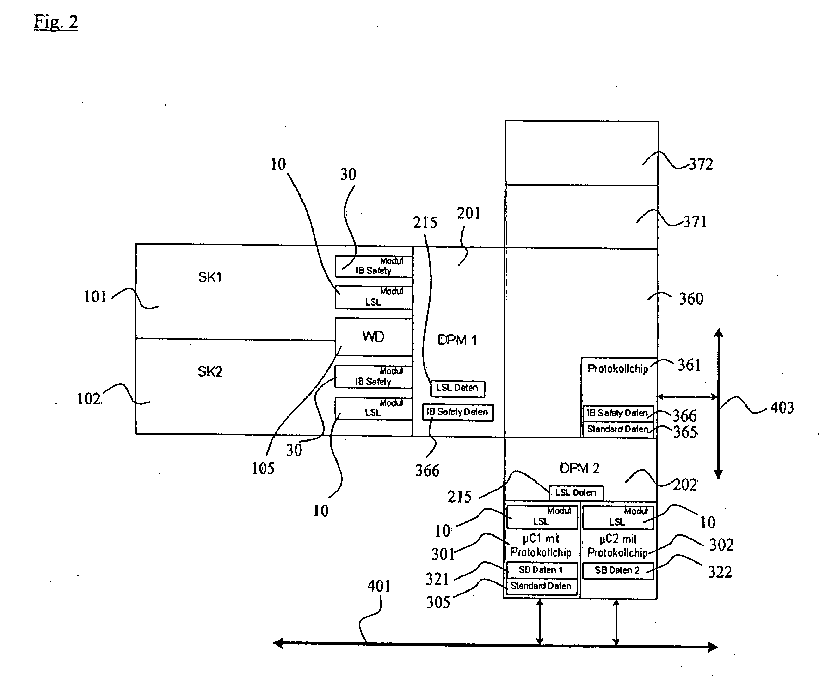

- Fig. 2: ein stark vereinfachtes Funktionsschaltbild einer beispielhaften Realisierung eines Gateways zwischen zwei unterschiedlichen sicheren Feldbussystemen nach der Erfindung, und

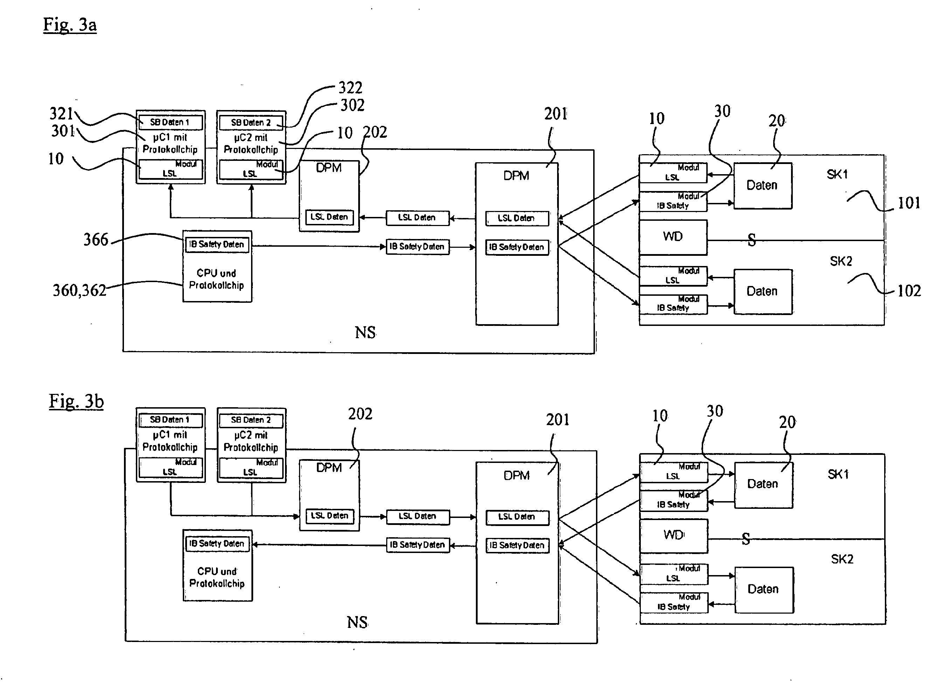

- Fig. 3a u. 3b: zwei stark vereinfachte Funktionsschaltbilder eines Beispiels eines erfindungsgemäßen Datenflusses zwischen einer IB Safety und einer systemunabhängigen sicheren Datenstruktur bzw. zwischen der systemunabhängigen sicheren und der IB Safety Datenstruktur basierend auf dem Funktionsschaltbild von Fig. 2.

Die erfindungsgemäße Kopplung wird nachfolgend beispielhaft anhand einer sicherheitsbezogenen Einrichtung einer an einem zu steuernden Prozess beteiligten Einheit mit einem Bus-/Netzwerk mit properitärem Sicherungsmechanismus beschrieben, insbesondere unter Bezugnahme auf einen Bus mit CAN-basierten Sicherungsmechanismus und einer INTERBUS basierenden sicherheitsbezogenen Einrichtung zur Verarbeitung von Sicherheitsdaten zur Steuerung einer an einem sicherheitskritischen Prozess beteiligten Einheit.

Zunächst wird Bezug auf die Fig. 1a und 1b genommen, welche zwei stark vereinfachte Funktionsschaltbilder von erfindungsgemäß ausgebildeten Busteilnehmereinheiten, welche eine jeweilige direkte Adaption einer 2-kanaligen Hardwarestruktur einer integrierten sicherheitsbezogenen Einrichtung zu einem anderem sicherheitsgerichteten Feldbusanschluss nach der Erfindung bereitstellten.

Allgemein wird hierbei in Fig. 1a eine Ausführungsform skizziert, bei der zwei Feldbusknoten bzw. Protokollchips auf einen Feldbus 401 mit properitärem Sicherungsmechanismus selbst in redundanter Art und Weise arbeiten, wie z.B. bei verschiedenen CAN-Lösungen. Bei dieser dargestellten Ausführungsform, wie mit den Bezugszeichen 301 und 302 angezeigt, integrieren an den Bus 401 gekoppelte Mikroprozessoren µC1 bzw. µC2 den jeweiligen Protokollchip, über welche mit dem properitärem Sicherungsmechanismus gebildete Sicherheitsbasierten (SB)-Daten 321 und 322 in den Bus 401 eingekoppelt oder aus dem Bus 401 ausgekoppelt werden. Bei der Fig. 1b wirkt auf den Bus 402 eines Systems mit properitärem Sicherungsmechanismus und also zur Einkopplung bzw. Auskopplung von durch einen properitärem Sicherungsmechanismus gebildeten SB-Daten 331 und 332 nur ein Feldbusknoten bzw. Protokollchip 313, an den zwei Mikroprozessor µC1 und µC2 311 bzw. 312 angeschlossen sind, so dass hier also ein Übergang zwischen einer Zweikanaligkeit und Einkanaligkeit, wie z.B. bei Profisafe gegeben ist. Sowohl in Fig. 1a als auch in Fig. 1b ist somit zur Busankopplung ein properitärer Sicherungsmechanismus mit zwei redundant arbeitenden Rechnern oder Verarbeitungskanälen zur Erstellung eines sicheren Protokolls zur Buseinkopplung und zur Auswertung des sicheren Protokolls zur Busauskopplung gegeben.

Der nachfolgend gemäß Fig. 1a beschriebene Ablauf bezieht sich auf die Buseinkopplung von Sicherheitsdaten, die über zwei, mit den Bezugskennzeichen 101 und 102 gekennzeichnete Ein-/Ausgangsdaten verarbeitende Sicherungskanäle SK1 und SK2 der sicherheitsbezogen Einrichtung erhalten werden. Die Sicherungskanäle 101 und 102 umfassen hierbei in praktischer Ausführung jeweils eine CPU mit den notwendigen peripheren Komponenten. Eine zugeordnete Watchdog 105 überwacht und gewährleistet die Funktionstüchtigkeit.

Im Fall einer Busteilnehmereinheit gemäß Fig. 1a ist jeder der Sicherheitsdaten verarbeitenden Sicherungskanäle 101 und 102 mit, dem anzukoppelnden sicherheitskritischen Prozess zugeordneten, nicht dargestellten Ein- und/oder Ausgabeeinheiten, wie z.B. Sensoren und/oder Aktoren, verbunden. Einer Busteilnehmereinheit mit sensor-seitiger Applikation werden somit den Sicherungskanälen 101 und 102 bevorzugt identische, für den sicherheitskritischen Prozess relevante Eingangsdaten zur Verfügung gestellt und zweckmäßigerweise zunächst gespeichert. Insbesondere im Fall einer Bus-Steuerungseinheit befinden sich zu sichernde Eingangsdaten z.B. in entsprechenden Speichern.

Die redundanten Eingangsdaten werden anschließend durch mit 10 gekennzeichnete, integrierte LSL-Moduleinheiten der Sicherungskanäle 101 und 102 zu gemeinsamen Daten mit einer lokal abgesicherten, also (Feld-)Bus-/Netzwerksystem unabhängig abgesicherten Datenstruktur verarbeitet. Diese (Feld-)Bus-/Netzwerksystem unabhängig abgesicherte Daten-oder Protokollstruktur wird nachfolgend mit LSL (Local Safety Layer) bezeichnet.

Unter bevorzugter Nutzung von einem gemäß der in Bezug genommenen Anmeldung DE 10 2004 039932.8 offenbarten Sicherheitsmechanismus werden die als Rohdaten vorliegenden Eingangsdaten zunächst redundant unter Anwendung gleicher Gesetzmäßigkeiten zu jeweils einem sicherheitsgerichteten Protokoll verarbeitet, die, sofern bei der Berechnung kein Fehler oder Ausfall aufgetreten ist, identisch sind und den Anforderungen der Norm an eine sicherheitsgerichtete Übertragung genügen. Anschließend wird aus den redundanten sicherheitsgerichteten Protokollen eine gemeinsame LSL abgearbeitet, so dass die mit 215 gekennzeichneten LSL-Daten anschließend einkanalig, z.B. basierend auf einer Punkt zu Punkt Verbindung zu dem Feldbus-/Netzwerkanschluss mit variabler Datenbreite für das anzukoppelnde properitäre System übergeben werden können.

Die über die LSL abgesicherten LSL-Daten 215 können somit über nicht sichere Hardware-Strukturen übertragen werden und werden unter Nutzung des in der Anmeldung DE 10 2004 039932.8 offenbarten Sicherheitsmechanismus durch ein anteiliges Zusammensetzen von Daten der redundanten sicherheitsgerichteten Protokolle in einem mit dem Bezugzeichen 200 gekennzeichneten Zwischenspeicher oder Zwischenregister, wie z.B. das angezeigte DPM gebildet.

Die Sicherheitsbetrachtung der redundanten Architektur kann in Bezug auf die LSL-Moduleinheiten 10 kann somit zunächst mit dem Ablegen der LSL-Daten 215 auf dem nicht-sicheren Speicher 200 beendet werden. Ab hier greift der Sicherungsmechanismus der LSL, denn die ab hier möglichen Fehler werden für die weitere Übertragung wie bisher betrachtet und müssen beherrscht werden. Ein hierfür in Betracht kommender Fehler aus dem Grundsatz für die Prüfung und Zertifizierung von "Bussystemen für die Übertragung sicherheitsrelevanter Nachrichten" ist eine Nachrichtenverfälschung.

An dem jeweiligen Feldbusanschluss der Busteilnehmereinheit werden die LSL-Daten 215 entsprechend der LSL-Definition jedoch zunächst wiederum über LSL-Moduleinheiten 10 sicherheitsgerichtet ausgewertet. Diese Auswertung findet gemäß Fig. 1a u. 1b bevorzugt in einer 2-kanaligen Redundanz mit oder ohne Diversität statt. Die ausgewerteten Daten werden darauf hin wiederum als Rohdaten in das eigentliche sicherheitsgerichtete properitären Bus-Netzwerk-Protokoll eingebracht. Es gelten dann die properitären Sicherungsmechanismen des jeweiligen angekoppelten sicheren Systems, nach denen die entsprechenden sicheren SB-Daten 321 und 322 gemäß Fig. 1a oder 331 und 332 gemäß Fig. 1b aus den Rohdaten erzeugt und in den Bus 401 bzw. 402 eingekoppelt werden.

Der von der Erfindung gleichermaßen umfasste, entgegengesetzte Kommunikationsweg von aus dem Bus 401 oder 402 auszukoppelnden sicheren SB-Daten 321 und 322 gemäß Fig. 1a oder 331 und 332 gemäß Fig. 1b in Richtung der Sicherungskanäle 101 und 102 zu zugeordneten Ausgabeeinheiten wird auf im Wesentlichen gleiche Weise jedoch vice versa bereitgestellt. Systemabhängig sichere Datenstrukturen werden somit zunächst über die jeweils properitären Sicherheitsmechanismen sicherheitsgerichtet ausgewertet und die ausgewerteten "Rohdaten" anschließend sicherheitsgerichtet zur Übertragung zwischen dem entsprechenden Feldbusanschluss und der sicherheitsbezogenen Einrichtung durch die in diesen integrierten LSL-Moduleinheiten 10 in die Systemunabhängige sichere LSL-Datenstruktur umgesetzt.

Somit ist für das anteilige Zusammensetzen des applikationsspezifisch redundant vorliegenden sicherheitsgerichteten Protokolls, oder gegebenenfalls applikationsspezifisch für das anteilige Zusammensetzen der redundant vorliegenden Rohdaten zur Bildung der einkanalig zu übertragenden LSL unter Nutzung des in der Anmeldung DE 10 2004 039932.8 offenbarten Sicherheitsmechanismus bevorzugt eine definierte oder definierbare Zugriffsregel vorgesehen, die zwar den LSL-Moduleinheiten 10 volle Leserechte auf den Zwischenspeicher 200 einräumt, die Schreibrechte auf dem Zwischenspeicher 200 jedoch steuert. Die Zugriffsregel bestimmt hierzu, dass von jeder der redundanten LSL-Moduleinheiten 10 aus nur die Teile des jeweils berechneten sicherheitsgerichteten Protokolls für das Bilden der LSL in die entsprechenden Speicherstellen des Zwischenspeichers 200 eingeschrieben werden können, für die die jeweilige LSL-Moduleinheiten 10 eine jeweilige Schreibberechtigung hat. Für jede Speicher- oder Registerstelle wird daher erfindungsgemäß für eine Kommunikationsrichtung bevorzugt nur jeweils eine Schreibberechtigung definiert.

Somit sind zum Einen jeweils beide LSL-Moduleinheiten 10 in der Lage, die kompletten LSL-Daten zu berechnen, so dass dieses sich positiv auf die benötigte Länge der Datenstruktur auswirkt, da alle Datenbits mit den unterschiedlichen Sicherungsmechanismen bereits in den redundanten LSL-Moduleinheiten 10 vorbekannt sind und keine zusätzlichen Datenbits übertragen werden müssen, die auf der Empfängerseite den Rückschluss auf die einwandfreie Berechnung zulassen. Darüber hinaus ist gewährleistet, dass eine LSL-Moduleinheiten 10 alleine nicht in der Lage ist, eine LSL zu senden, wobei die Steuerung über die jeweils nur einmal vergebbare Schreibberechtigung von Daten in einer Registerstelle eine einfach zu implementierende und hoch effiziente Möglichkeit darstellt, um unabhängig von der LSL und einem verwendeten System eine kostengünstige wesentlich erhöhte Sicherheit zu gewährleisten.

Der vollständige Lesezugriff auf den Zwischenspeicher 200 ermöglicht einen einfachen Vergleich der gesamten Daten, indem zum Einen auf einfache Weise überprüfbar ist, ob die gemeinsam gebildete LSL welche beispielsweise die Sicherheitsanforderungen für eine einfache Übertragung gemäß SIL 3 IEC 61508 erfüllt, fehlerfrei ist, und zwar durch jeweilige Verifikation gegenüber dem eigenen vorhergehend separat gebildeten sicherheitsgerichteten Protokoll. Darüber hinaus ermöglicht der vollumfängliche Lesezugriff für jede der LSL-Moduleinheiten 10, die, zweckmäßigerweise bereits im Vorfeld der Steuerung/Überwachung/Regelung eines sicherheitskritischen Prozesses durchführbare Überprüfung, ob die Zugriffsregel generell fehlerfrei erfolgt. Hierzu wird insbesondere überprüft, ob die berechneten Daten einer jeweiligen Moduleinheiten 10 der redundanten Verarbeitungskanäle ausschließlich, dies aber garantiert, nur in die jeweils zugewiesenen Speicheradressen des Zwischenspeichers 200 geschrieben werden.
Ferner ermöglicht der vollständige Lesezugriff auf den Zwischenspeicher 200 die Auswertung von LSL-Daten 210 durch jede LSL-Moduleinheit 10 mit anschließendem gegenseitigem Vergleich auf Korrektheit.

Hinsichtlich weiterer diesbezüglicher Ausführungen wird wiederum auf die Offenbarung der Anmeldung DE 10 2004 039932.8 Bezug genommen.

Durch Anwendung der Erfindung wird somit eine flexible, busunabhängige modulare sicherheitsgerichtete Kommunikations- und Hardware Struktur in einer Busteilnehmer-/Bussteuerungseinheit gewährleistet. Insbesondere im Fall einer in einer solchen Busteilnehmer-/Bussteuerungseinheit integrierten oder integrierbaren sicherheitsbezogenen Einrichtung mit Programmieroberfläche ist darüber hinaus ein hoher Widerverwendungswert als Plattform sichergestellt.
Die Erfindung ermöglicht folglich eine schnelle Ankopplung an vorhandene oder zukünftige Feldbus/Netzwerksysteme, wobei die hohe Performance der sicherheitsbezogenen Einrichtung der Buseinheit erhalten bleibt, da die Kommunikation mit dem anzukoppelnden (Feld-)Bus-/Netzwerksystems verlagert wird.

Ferner können durch Anwendung der Erfindung Gateway-Funktionen zwischen unterschiedlichsten properitären sicherheitsgerichteten (Feld-)Bus-/Netzwerksystemen auf einfache Weise realisiert werden, wie nachfolgend am Beispiel einer zusätzlichen CAN Safety Applikation neben einer INTERBUS Safety Kommunikation näher beschrieben.

Zunächst wird hierzu auf Fig. 2 Bezug genommen, wobei gleiche Bezugszeichen gleiche oder funktionsgleiche Komponenten kennzeichnen. Wie aus Fig. 2 ersichtlich, integriert die sicherheitsbezogene Einrichtung einer entsprechend angepassten Busteilnehmereinheit redundante LSL-Moduleinheiten 10 zusätzlich zu redundanten auf einem INTERBUS Safety Protokoll aufbauenden IB-Safety-Moduleinheiten 30 mit den redundanten Sicherungskanälen 101 und 102.

Ein nicht-sicherer erster DPM ist als Koppelspeicher 201 zur Aufnahme/Übergabe der über die LSL abgesicherten LSL-Daten 215 und der über das INTERBUS Safety Protokoll abgesicherten IB-Safety-Daten 366 mit den sicherheitsbezogenen Moduleineinheiten 10 und 30 gekoppelt. Der Koppelspeicher 201 ist mit einer INTERBUS spezifischen Steuereinheit oder CPU 360 mit integriertem oder externen Protokollchip 361 verbunden, so dass ein erster INTERBUS basierter Feldbusknoten für einen INTERBUS Safety Bus 403 bereitgestellt ist. Von dem oder in den Bus 403 über den Protokollchip 361 auszukoppelnde bzw. einzukoppelnde Sicherheitsdaten basieren auf dem INTERBUS Safety Protokoll und liegen entsprechend als IB-Safety-Daten 366 vor. Zusätzlich können nicht abgesicherte Standard Daten 365 über den Protokollchip 361 eingekoppelt und ausgekoppelt werden.

An diese INTERBUS spezifischen Steuereinheit oder CPU 360 ist ein weiterer DPM als zusätzlicher Koppelspeicher 202 angeschlossen, an dem ein sicherheitsgerichteter CAN-Busanschluss angebracht ist. Die Kopplung kann jedoch auch über andere Medien erfolgen, wie z.B. mittels SPI, Wireless, Multi Port Memory, PCI express.

Der sicherheitsgerichtete CAN-Busanschluss ist im Wesentlichen wie unter Bezugnahme auf Fig. 1a beschrieben, aufgebaut, wobei auch nicht abgesicherte Standard Daten 305 über den µC1 mit integriertem Protokollchip 361 eingekoppelt und ausgekoppelt werden können. Beim Übergang von dem Koppelspeicher 202 zu der 2 kanaligen Struktur des CAN-Busanschluss können entsprechend wieder die vorbeschriebenen Sicherungsmechanismen genutzt werden.

Optional kann an die INTERBUS spezifische Steuereinheit oder CPU 360 ein weiterer Koppelspeicher 371 angeschlossen sein, an dem z.B. ein weiteres optionales (sicheres) Steuerungssystem 372 vorgesehen ist.

Anhand der Fig. 3a und 3b wird nachfolgend ein auf dem Funktionsschaltbild von Fig. 2 basierter Datenfluss zwischen einer IB Safety Datenstruktur und der spezifischen Datenstruktur eines weiteren Systems mit properitärem Sicherungsmechanismus bzw. zwischen der spezifischen Datenstruktur des weiteren Systems mit properitärem Sicherungsmechanismus und der IB Safety Datenstruktur beispielhaft beschrieben, wobei der nicht-sichere Hardware Strukturen umfassende Bereich mit "NS" und der sichere Bereich mit "S" gekennzeichnet ist.

Bei Fig. 3a werden über den INTERBUS basiertenFeldbusanschluss 360, 361 ausgekoppelte, abgesicherte IB-Safety-Daten 366 im Rahmen einer Gateway-Funktionalität zunächst dem Koppelspeicher 201 zur weiteren Übergabe zugeführt, z.B. mittels eines nicht dargestellten Mikroprozessors. Aus dem Koppelspeicher 201 werden die IB-Safety-Daten 366 von den redundanten IB-Safety-Moduleinheiten 30 der sicherheitsbezogenen Einrichtung ausgelesen und zu "Rohdaten" 20 ausgewertet. Diese redundant vorliegenden "Rohdaten" werden daraufhin von den redundanten LSL-Moduleinheiten 10 der sicherheitsbezogenen Einrichtung zu lokal abgesicherten LSL-Daten 215 verarbeitet und wiederum dem Koppelspeicher 201 zur weiteren einkanaligen Übergabe zusammengesetzt zugeführt. Von dort werden die lokal abgesicherten LSL-Daten 215, z.B. mittels eines nicht dargestellten Mikroprozessors dem Koppelspeicher 202 zur weiteren Übergabe zugeführt. Aus dem Köppelspeicher 202 werden die LSL-Daten 215 von den redundanten LSL-Moduleinheiten 10 des Feldbusanschlusses für das System mit properitärem Sicherungsmechanismus, z. B für einen CAN-Bus, ausgelesen und ausgewertet. In alternativer, applikationsspezifischer Ausführung werden LSL-Daten 215 nach Übergabe an wenigstens eine weitere Koppeleinrichtung oder direkt aus dem Koppelspeicher 201 von den redundanten LSL-Moduleinheiten 10 des Feldbusanschlusses für das System mit properitärem Sicherungsmechanismus ausgelesen und anschließend ausgewertet. Die beim Übergang von der einkanaligen zur mehrkanaligen Struktur ausgewerteten redundant vorliegenden "Rohdaten" werden anschließend mittels der redundanten, an das properitäre (Feld-)Bus-/Netzwerksystem gekoppelten Mikroprozessoren mit jeweils integriertem Protokollchip 301 und 302 in das sicherheitsgerichtete properitäre Protokoll eingebettet und als mit dem properitärem Sicherungsmechanismus gebildete SB-Daten 321 und 322 in das System eingekoppelt.

Bei Fig. 3b ist die entgegengesetzte Kommunikation dargestellt. Entsprechend werden über den auf dem properitären Sicherungsmechanismus basierten Feldbusanschluss abgesicherte SB-Daten ausgekoppelt, ausgewertet und über die sicherheitsgerichteten LSL-Moduleinheiten entsprechend lokal abgesicherte LSL-Daten dem Koppelspeicher 202 zur weiteren Übergabe zugeführt. Nach weiter Übergabe an den Koppelspeicher 201 werden die LSL-Daten aus diesem von den redundanten LSL-Moduleinheiten 10 der sicherheitsbezogenen Einrichtung ausgelesen und zu "Rohdaten" 20 ausgewertet. Diese redundant vorliegenden "Rohdaten" werden daraufhin von den redundanten IB-Safety-Moduleinheiten 30 der sicherheitsbezogenen Einrichtung zu IB-Safety-Daten verarbeitet und wiederum dem Koppelspeicher 201 zur einkanaligen weiteren Übergabe zusammengesetzt zugeführt. Von dort werden die IB-Safety-Daten dem INTERBUS basierten Feldbusanschluss zur Buseinkopplung übergeben.

Der Koppelspeicher 201 dient somit zur einkanaligen Übergabe von Systemspezifisch abgesicherten und lokal abgesicherten Daten.

Wie vorstehend beschrieben, können über die Sicherungskanäle 101 und 102 auch lokale Ein-/Ausgänge verbunden sein und sind somit auch lokale Sicherheitsein-und/oder -ausgangsdaten in den erfindungsgemäßen Kommunikationsweg innerhalb der, gegebenenfalls auch modular aufgebauten Einheit einbindbar.

## Patentansprüche

1. Verfahren zur Kopplung von wenigstens zwei Feldbus- oder Netzwerksystemen mit jeweils unterschiedlichen Sicherheitsmechanismen, die zum Umsetzen von zu übertragenen Sicherheitsdaten in eine Systemabhängige sichere Datenstruktur und/oder zum Umsetzen von zu übertragenen Sicherheitsdaten aus einer Systemabhängigen sicheren Datenstruktur ausgebildet sind,
wobei das Verfahren **dadurch gekennzeichnet ist, dass** zwischen den unterschiedlichen Systembasierten Sicherheitsmechanismen zu übertragene Sicherheitsdaten unter zusätzlicher Nutzung einer definierten, jedoch Systemunabhängigen sicheren Datenstruktur (215) verarbeitet werden (10, 200, 201, 202, 215), wobei beim Umsetzen der Sicherheitsdaten aus einer sicheren Datenstruktur, diese sicherheitsgerichtet ausgewertet wird.

2. Verfahren nach vorstehendem Anspruch, wobei wenigstens einer der jeweils unterschiedlichen Sicherheitsmechanismen der zu koppelnden Feldbus- oder Netzwerksysteme ein properitärer Sicherheitsmechanismus ist.

3. Verfahren nach einem der vorstehenden Ansprüche, ferner **dadurch gekennzeichnet, dass** zwischen den Systemen zu übertragene Sicherheitsdaten vor deren Übertragung in der definierten, jedoch Systemunabhängigen sicheren Datenstruktur aus einer mehrkanalig oder einkanalig vorliegenden Systemabhängigen sicheren Datenstruktur (321, 322, 366) umgesetzt werden.

4. Verfahren nach einem der vorstehenden Ansprüche, ferner **dadurch gekennzeichnet, dass** zwischen den Systemen zu übertragene Sicherheitsdaten nach deren Übertragung in der definierten, jedoch Systemunabhängigen sicheren Datenstruktur in eine mehrkanalige oder einkanalige Systemabhängige sichere Datenstruktur (321, 322, 366) umgesetzt werden.

5. Verfahren nach einem der vorstehenden Ansprüche, ferner **dadurch gekennzeichnet, dass** eine jeweils, von einer sicheren in eine andere sichere Datenstruktur umzusetzende Datenstruktur sicherheitsgerichtet ausgewertet (10, 20, 301, 302, 311, 312) wird und ein nach Auswertung ein- oder mehrkanalig vorliegender Datensatz (20) in die entsprechende andere sichere Datenstruktur umgesetzt (10, 20, 301, 302, 311, 312) wird.

6. Verfahren nach einem der vorstehenden Ansprüche, ferner **dadurch gekennzeichnet, dass** die unter zusätzlicher Nutzung einer definierten, jedoch Systemunabhängigen sicheren Datenstruktur (215) verarbeiteten Sicherheitsdaten innerhalb einer an einem zu steuernden Prozess beteiligten Einheit eines der zu koppelnden Systeme übertragen werden, und zwar zwischen einer für diesen Prozess relevante Sicherheitsdaten verarbeitenden sicherheitsbezogenen Einrichtung der Einheit und wenigstens einem (Feld- )Bus-/Netzwerkanschluss der Einheit.

7. Verfahren nach vorstehendem Anspruch ferner **dadurch gekennzeichnet, dass** einen ein- oder mehrkanalig vorliegenden Satz von Ein-/Ausgangsdaten umfassende Sicherheitsdaten des zu steuernden Prozesses in die definierte, jedoch Systemunabhängige sichere Datenstruktur umgesetzt wird oder durch Auswertung der definierten, jedoch Systemunabhängigen sicheren Datenstruktur aus dieser gewonnen wird.

8. Verfahren nach einem der vorstehenden Ansprüche, ferner **dadurch gekennzeichnet, dass** die Systemunabhängige sichere Datenstruktur für eine einkanalige Übertragung abgesichert wird.

9. Verfahren nach vorstehendem Anspruch, ferner **dadurch gekennzeichnet, dass** die Absicherung der Datenstruktur unter Verwendung von Sicherheitsmechanismen gemäß IEC 61508 und SIL 3 durchgeführt wird.

10. Verfahren nach einem der beiden vorstehenden Ansprüche, ferner **dadurch gekennzeichnet, dass** die Übertragung unter Verwendung von nicht-sicheren Komponenten (200, 201, 202) durchgeführt wird.

11. Vorrichtung zur Kopplung von wenigstens zwei Feldbus- oder Netzwerksystemen, welche jeweils unterschiedliche Sicherheitsmechanismen zum Umsetzen von zu übertragenen Sicherheitsdaten in eine Systemabhängige sichere Datenstruktur und/oder umgekehrt aufweisen, umfassend wenigstens ein erstes und ein zweites sicherheitsgerichtetes Datenverarbeitungsmodul (10) zum Verarbeiten von zwischen den unterschiedlichen Systembasierten Sicherheitsmechanismen zu übertragenen Sicherheitsdaten unter Anwendung einer definierten, jedoch Systemunabhängigen sicheren Datenstruktur (215), wobei zumindest eines der Datenverarbeitungsmodule zum sicherheitsgerichteten Auswerten der Systemunabhängigen sicheren Datenstruktur zum Bereitstellen von Sicherheitsdaten ausgebildet ist.

12. Vorrichtung nach vorstehendem Anspruch, wobei wenigstens einer der jeweils unterschiedlichen Sicherheitsmechanismen der zu koppelnden Feldbus- oder Netzwerksysteme ein properitärer Sicherheitsmechanismus ist.

13. Vorrichtung nach einem der vorstehenden Ansprüche 11 oder 12, ferner **dadurch gekennzeichnet, dass** jedes der Datenverarbeitungsmodule (10) mit einem systembasierten Sicherungsmechanismus (30, 301, 302, 311, 312) gekoppelt ist, wobei zumindest das wenigstens eine erste Datenverarbeitungsmodul zum Umsetzen von zu übertragenen ein- oder mehrkanalig vorliegenden Sicherheitsdaten in die definierte, jedoch Systemunabhängige sichere Datenstruktur ausgebildet ist und zumindest das wenigstens eine zweite Datenverarbeitungsmodul zum sicherheitsgerichteten Auswerten der Systemunabhängigen sicheren Datenstruktur zum Bereitstellen von ein- oder mehrkanalig vorliegenden Sicherheitsdaten ausgebildet ist.

14. Vorrichtung nach einem der vorstehenden Ansprüche 11 bis 13, ferner **dadurch gekennzeichnet, dass** die Datenverarbeitungsmodule (10) in einer an einem zu steuernden Prozess beteiligten Einheit eines der zu koppelnden Systeme integriert sind, wobei wenigstens eines der wenigstens zwei Datenverarbeitungsmodule in einer für diesen Prozess relevante Sicherheitsdaten verarbeitenden sicherheit3bezogenen Einrichtung integriert ist und wenigstens ein anderes der wenigstens zwei Datenverarbeitungsmodule mit einem Feldbus- oder Netzwerkanschluss der Einheit integriert ist.

15. Vorrichtung nach vorstehendem Anspruch ferner **gekennzeichnet durch** wenigstens ein in der sicherheitsbezogenen Einrichtung integriertes Datenverarbeitungsmodul zum Umsetzen von, einen ein- oder mehrkanalig vorliegenden Satz von Ein-/Ausgangsdaten umfassendenden Sicherheitsdaten des zu steuernden Prozesses in die definierte, jedoch Systemunabhängige sichere Datenstruktur und/oder zum sicherheitsgerichteten Auswerten der definierten, jedoch Systemunabhängigen sicheren Datenstruktur zum ein- oder mehrkanaligen Bereitstellen von einen Satz von Ein-/Ausgangsdaten umfassendenSicherheitsdaten.

16. Vorrichtung nach einem der beiden vorstehenden Ansprüche ferner **dadurch gekennzeichnet, dass** die Einheit eine modular aufgebaute Einheit ist.

17. Vorrichtung nach einem der drei vorstehenden Ansprüche ferner **dadurch gekennzeichnet, dass** die Einheit eine Busteilnehmereinheit oder eine Bussteuereinheit ist,

18. Vorrichtung nach einem der vier vorstehenden Ansprüche ferner **dadurch gekennzeichnet, dass** die Einheit als eine Einheit mit Gateway-Funktionalität ausgebildet ist.

19. Vorrichtung nach einem der vorstehenden Ansprüche 11 bis 18, ferner **dadurch gekennzeichnet, dass** die Datenverarbeitungsmodule (10) zum Verarbeiten einer Systemunabhängig abgesicherten Datenstruktur für eine einkanalige Übertragung zwischen jeweils wenigstens zwei Datenverarbeitungomodulen ausgebildet sind.

20. Vorrichtung nach vorstehendem Anspruch, ferner **gekennzeichnet durch** wenigstens eine nicht-sichere Kopplungskomponente (200, 201, 202) im Übertragungsweg für die einkanalige Übertragung zwischen jeweiligen Datenverarbeitungsmodulen.

21. Vorrichtung nach einem der vorstehenden Ansprüche 11 bis 20, ferner **dadurch gekennzeichnet, dass** ein Datenverarbeitungsmodul wenigstens zwei redundante, zusammenwirkende Moduleinheiten (10) umfasst, wobei die Moduleinheiten Ausgangsseitig mit einer nicht-sicheren Kopplungskomponente (200, 201, 202) zur Übergabe einer gemeinsam Systemunabhängig abgesicherten Datenstruktur an diese Kopplungskomponente gekoppelt sind und und/oder Eingangsseitig mit einer nicht-sicheren Kopplungskomponente (200, 201, 202) zum sicherheitsgerichteten Auslesen einer Systemunabhängig abgesicherten Datenstruktur aus dieser Kopplungskomponente an diese gekoppelt sind.

22. Vorrichtung nach einem der beiden vorstehenden Ansprüche, **dadurch gekennzeichnet, dass** eine nichtsichere Kopplungskomponente wenigstens einen Mikroprozessor, seriellen Bus und/oder Koppelspeicher (200, 201, 202), insbesondere in Form eines DPMs umfasst.

23. Vorrichtung nach einem vorstehenden Ansprüche 11 bis 22, **dadurch gekennzeichnet, dass** die Datenverarbeitungsmodule (10) Hardware und/oder Software umfassen.

24. Rechnerauslesbares Medium mit darauf gespeicherten Informationen, die, ausgelesen durch einen Rechner, zur Durchführen aller Verfahrensschritte des Verfahrens nach einem der vorstehenden Ansprüche 1 bis 10 mit dem Rechner zusammenwirken.

25. Rechnerauslesbares Medium mit darauf gespeicherten Informationen, die, ausgelesen durch einen Rechner einer an einem zu steuernden Prozess beteiligten Bus- oder Netzwrerkeinheit innerhalb einer Vorrichtung nach einem der Ansprüche 11 bis 23, zur Durchführen aller Verfahrensschritte des Verfahrens nach einem der vorstehenden Ansprüche 1 bis 10 mit dem Rechner zusammenwirken.

## Claims

1. Method for coupling at least two field bus or network systems each having different safety mechanisms, which are designed to convert safety data to be transmitted into a system-dependent safe data structure and/or to convert safety data to be transmitted from a system-dependent safe data structure,
wherein the method is **characterised in that** safety data to be transmitted between the different system-based safety mechanisms are processed (10, 200, 201, 202, 215) additionally using a defined, but system-independent, safe data structure (215), wherein when converting the safety data from a safe data structure, this is evaluated on a safety basis.

2. Method as claimed in the preceding claim, wherein at least one of the mutually different safety mechanisms of the field bus or network systems to be coupled is a proprietary safety mechanism.

3. Method as claimed in any one of the preceding claims, further **characterised in that** safety data to be transmitted between the systems are converted from a multiple-channel or single-channel system-dependent safe data structure (321, 322, 366) prior to being transmitted into the safe data structure which is defined but is system-independent.

4. Method as claimed in any one of the preceding claims, further **characterised in that** safety data to be transmitted between the systems are converted into a multiple-channel or single-channel system-dependent safe data structure (321, 322, 366) after being transmitted into the safe data structure which is defined but is system-independent.

5. Method as claimed in any one of the preceding claims, further **characterised in that** in each case one data structure which is to be converted from one safe data structure to another safe data structure is evaluated (10, 20, 301, 302, 311, 312) on a safety basis, and a dataset (20), which is in the form of one or more channels after evaluation, is converted (10, 20, 301, 302, 311, 312) into the corresponding other safe data structure.

6. Method as claimed in any one of the preceding claims, further **characterised in that** the safety data which are processed additionally using a defined, but system-independent, safe data structure (215) are transmitted within a unit, which is involved with a process to be controlled, of one of the systems to be coupled, to be precise between a safety-related device, which processes safety data which are relevant for this process, of the unit and at least one (field)bus/network connection of the unit.

7. Method as claimed in the preceding claim, further **characterised in that** a set, which is in the form of one or more channels, of safety data comprising input/output data of the process to be controlled is converted into the safe data structure which is defined but is system-independent, or is obtained from the safe data structure which is defined but is system-independent by evaluation thereof.

8. Method as claimed in any one of the preceding claims, further **characterised in that** the system-independent safe data structure is protected for single-channel transmission.

9. Method as claimed in the preceding claim, further **characterised in that** the data structure is protected using safety mechanisms in accordance with IEC 61508 and SIL 3.

10. Method as claimed in any one of the two preceding claims, further **characterised in that** the transmission is carried out using non-safe components (200, 201, 202).

11. Apparatus for coupling at least two field bus or network systems which each have different safety mechanisms, for converting safety data to be transmitted into and/or from a system-dependent safe data structure, comprising at least one first and one second safety-based data processing module (10) for processing safety data to be transmitted between the different system-based safety mechanisms using a defined, but system-independent, safe data structure (215), wherein at least one of the data processing modules is designed for the safety-based evaluation of the system-independent safe data structure in order to provide safety data.

12. Apparatus as claimed in the preceding claim, wherein at least one of the mutually different safety mechanisms of the field bus or network systems to be coupled is a proprietary safety mechanism.

13. Apparatus as claimed in any one of the preceding claims 11 or 12, further **characterised in that** each of the data processing modules (10) is coupled to a system-based safety mechanism (30, 301, 302, 311, 312), wherein at least the at least one first data processing module is designed to convert safety data which are to be transmitted and are in the form of one or more channels into the defined, but system-independent, safe data structure, and at least the at least one second data processing module is designed for safety-based evaluation of the system-independent safe data structure in order to provide safety data in the form of one or more channels.

14. Apparatus as claimed in any one of the preceding claims 11 to 13, further **characterised in that** the data processing modules (10) are integrated in a unit, which is involved with a process to be controlled, of one of the systems to be coupled, wherein at least one of the at least two data processing modules is integrated in a safety-related device which processes safety data which are relevant for this process, and at least one other of the at least two data processing modules is integrated with a field bus or network connection of the unit.

15. Apparatus as claimed in the preceding claim, further **characterised by** at least one data processing module, which is integrated in the safety-related device, for conversion of a set, which is in the form of one or more channels, of safety data comprising input/output data of the process to be controlled into the defined, but system-independent, safe data structure, and/or for safety-based evaluation of the defined, but system-independent, safe data structure, for single-channel or multiple-channel provision of a set of safety data comprising input/output data.

16. Apparatus as claimed in any one of the two preceding claims, further **characterised in that** the unit is a modular unit.

17. Apparatus as claimed in any one of the three preceding claims, further **characterised in that** the unit is a bus subscriber unit or a bus control unit.

18. Apparatus as claimed in any one of the four preceding claims, further **characterised in that** the unit is in the form of a unit with gateway functionality.

19. Apparatus as claimed in any one of the preceding claims 11 to 18, further **characterised in that** the data processing modules (10) are designed to process a data structure which is protected on a system-independent basis for single-channel transmission between in each case at least two data processing modules.

20. Apparatus as claimed in the preceding claim, further **characterised by** at least one non-safe coupling component (200, 201, 202) in the transmission path for the single-channel transmission between respective data processing modules.

21. Apparatus as claimed in any one of the preceding claims 11 to 20, further **characterised in that** one data processing module comprises at least two redundant, interacting module units (10), wherein the module units are coupled on the output side to a non-safe coupling component (200, 201, 202) for transferring a data structure, which is jointly protected on a system-independent basis, to this coupling component, and/or are coupled on the input side to a non-safe coupling component (200, 201, 202) for safety-based reading of a data structure, which is protected on a system-independent basis, from this coupling component thereto.

22. Apparatus as claimed in any one of the two preceding claims, **characterised in that** a non-safe coupling component comprises at least one microprocessor, serial bus and/or coupling memory (200, 201, 202), in particular in the form of a DPM.

23. Apparatus as claimed in any one of the preceding claims 11 to 22, **characterised in that** the data processing modules (10) comprise hardware and/or software.

24. Computer-readable medium with information stored thereon which, read by a computer, interact with the computer to perform all the method steps of the method as claimed in any one of the preceding claims 1 to 10.

25. Computer-readable medium with information stored thereon which, read by a computer of a bus or network unit, involved with a process to be controlled, within an apparatus as claimed in any one of claims 11 to 23, interact with the computer to perform all the method steps of the method as claimed in any one of the preceding claims 1 to 10.

## Revendications

1. Procédé de couplage d'au moins deux systèmes de bus de terrain ou de réseau à des mécanismes de sécurité différents prévus pour la conversion de données de sécurité à transmettre vers une structure de données sécurisée dépendante du système et/ou pour la conversion de données de sécurité à transmettre à partir d'une structure de données sécurisée dépendante du système,
ledit procédé étant **caractérisé en ce que** les données de sécurité à transmettre entre les différents mécanismes de sécurité basés système sont traitées par exploitation complémentaire d'une structure de données (215) sécurisée définie mais indépendante du système (10, 200, 201, 202, 215), une évaluation en matière de sécurité d'une structure de données sécurisée étant effectuée lors de la conversion des données de sécurité à partir de celle-ci.

2. Procédé selon la revendication précédente, où au moins un des mécanismes de sécurité différents des systèmes de bus de terrain ou de réseau à coupler est un mécanisme de sécurité propriétaire.

3. Procédé selon l'une des revendications précédentes, **caractérisé en outre en ce que** les données de sécurité à transmettre entre les systèmes sont avant leur transmission converties dans la structure de données sécurisée définie mais indépendante du système, à partir d'une structure de données (321, 322, 366) sécurisée dépendante du système existante, à plusieurs canaux ou à un seul canal.

4. Procédé selon l'une des revendications précédentes, **caractérisé en outre en ce que** les données de sécurité à transmettre entre les systèmes sont après leur transmission converties dans la structure de données sécurisée définie mais indépendante du système vers une structure de données (321, 322, 366) sécurisée dépendante du système, à plusieurs canaux ou à un seul canal.

5. Procédé selon l'une des revendications précédentes, **caractérisé en outre en ce qu'**une structure de données à convertir d'une structure de données sécurisée vers une autre structure de données sécurisée est évaluée en matière de sécurité (10, 20, 301, 302, 311, 312), et **en ce qu'**après évaluation, un ensemble de données (20) existant, à un ou plusieurs canaux, est converti vers l'autre structure de données sécurisée correspondante (10, 20, 301, 302, 311, 312).

6. Procédé selon l'une des revendications précédentes, **caractérisé en outre en ce que** les données de sécurité traitées par exploitation complémentaire d'une structure de données (215) sécurisée définie mais indépendante du système sont transmises à l'intérieur d'une unité d'un des systèmes à coupler, participant à un processus à commander, et cela entre un dispositif orienté sécurité de l'unité traitant des données de sécurité pertinentes pour ce processus et au moins une connexion de bus(de terrain)/de réseau de l'unité.

7. Procédé selon la revendication précédente, **caractérisé en outre en ce que** des données de sécurité comprenant un ensemble de données d'entrée/de sortie existant, à un ou plusieurs canaux, du processus à commander sont converties vers la structure de données sécurisée définie mais indépendante du système, ou obtenues à partir de la structure de données sécurisée définie mais indépendante du système par évaluation de celle-ci.

8. Procédé selon l'une des revendications précédentes, **caractérisé en outre en ce que** la structure de données sécurisée définie mais indépendante du système est sécurisée pour une transmission à un seul canal.

9. Procédé selon la revendication précédente, **caractérisé en outre en ce que** la sécurisation de la structure de données est effectuée en exploitant des mécanismes de sécurité conformément à IEC 61508 et à SIL 3.

10. Procédé selon l'une des deux revendications précédentes, **caractérisé en outre en ce que** la transmission est effectuée en exploitant des composants non sécurisés (200, 201, 202).

11. Dispositif pour le couplage d'au moins deux systèmes de bus de terrain ou de réseau, présentant chacun des mécanismes de sécurité différents pour la conversion de données de sécurité à transmettre vers une structure de données sécurisée dépendante du système et/ou inversement, comprenant au moins un premier et un deuxième module de traitement de données (10) orientés sécurité pour le traitement des données de sécurité à transmettre entre les différents mécanismes de sécurité basés système, par exploitation d'une structure de données (215) sécurisée définie mais indépendante du système, au moins un des modules de traitement de données étant réalisé pour l'évaluation orientée de la structure de données sécurisée indépendante du système afin de délivrer des données de sécurité.

12. Dispositif selon la revendication précédente, où au moins un des mécanismes de sécurité différents des systèmes de bus de terrain ou de réseau à coupler est un mécanisme de sécurité propriétaire.

13. Dispositif selon la revendication 11 ou la revendication 12, **caractérisé en outre en ce que** chacun des modules de traitement de données (10) est couplé à un mécanisme de sécurité basé système (30, 301, 302, 311, 312), au moins le au moins un premier module de traitement de données étant réalisé pour la conversion des données de sécurité existantes à un ou plusieurs canaux à transmettre vers la structure de données sécurisée définie mais indépendante du système, et au moins un deuxième module de traitement de données pour l'évaluation orientée sécurité de la structure de données sécurisée indépendante du système étant réalisés pour la délivrance de données de sécurité existantes à un ou plusieurs canaux.

14. Dispositif selon l'une des revendications 11 à 13, **caractérisé en outre en ce que** les modules de traitement de données (10) sont intégrés à une unité d'un des systèmes à coupler, participant à un processus à commander, au moins l'un des au moins deux modules de traitement de données étant intégré à un dispositif orienté sécurité traitant des données de sécurité pertinentes pour ce processus et au moins un autre des au moins deux modules de traitement de données étant intégré à une connexion de bus(de terrain) ou de réseau de l'unité.

15. Dispositif selon la revendication précédente, **caractérisé en outre par** au moins un module de traitement de données intégré au dispositif orienté sécurité pour la conversion de données de sécurité comprenant un ensemble de données d'entrée/de sortie existant, à un ou plusieurs canaux, du processus à commander vers la structure de données sécurisée définie mais indépendante du système, et/ou pour l'évaluation orientée sécurité de la structure de données sécurisée définie mais indépendante du système pour la délivrance à un ou plusieurs canaux de données de sécurité comprenant un ensemble de données d'entrée/de sortie.

16. Dispositif selon l'une des deux revendications précédentes, **caractérisé en outre en ce que** l'unité est une unité à structure modulaire.

17. Dispositif selon l'une des trois revendications précédentes, **caractérisé en outre en ce que** l'unité est une unité participant au bus ou une unité de commande de bus.

18. Dispositif selon l'une des quatre revendications précédentes, **caractérisé en outre en ce que** l'unité est réalisée comme unité à fonction de passerelle.

19. Dispositif selon l'une des revendications 11 à 18, **caractérisé en outre en ce que** les modules de traitement de données (10) sont réalisés pour le traitement d'une structure de données sécurisée indépendante du système pour une transmission à un seul canal entre au moins deux modules de traitement de données.

20. Dispositif selon la revendication précédente, 1 **caractérisé en outre par** au moins un composant de couplage non sécurisé (200, 201, 202) sur le chemin de transmission pour la transmission à un seul canal entre les modules de traitement de données respectifs.

21. Dispositif selon l'une des revendications 11 à 20, **caractérisé en outre en ce qu'**un module de traitement de données comprend au moins deux unités modulaires (10) redondantes, coopérant l'une avec l'autre, les unités modulaires étant couplées côté sortie à un composant de couplage non sécurisé (200, 201, 202) pour la transmission audit composant de couplage d'une structure de données sécurisée en commun indépendamment du système, et/ou côté entrée à un composant de couplage non sécurisé (200, 201, 202) pour l'extraction orientée sécurité d'une structure de données sécurisée indépendante du système à partir dudit composant de couplage.

22. Dispositif selon l'une des deux revendications précédentes, **caractérisé en ce qu'**un composant de couplage non sécurisé comprend au moins un microprocesseur, un bus sériel et/ou une mémoire de couplage (200, 201, 202), en particulier sous la forme d'une DPM.

23. Dispositif selon l'une des revendications 11 à 22, **caractérisé en ce que** les modules de traitement de données (10) comprennent un matériel et/ou un logiciel.

24. Support lisible par un ordinateur avec des informations stockées, lesquelles, extraites par un ordinateur, coopèrent avec l'ordinateur à l'exécution de toutes les étapes du procédé selon l'une des revendications 1 à 10.

25. Support lisible par un ordinateur avec des informations stockées, lesquelles, extraites par un ordinateur d'une unité de bus ou de réseau participant à un processus à commander à l'intérieur d'un dispositif selon l'une des revendications 11 à 23, coopèrent avec l'ordinateur à l'exécution de toutes les étapes du procédé selon l'une des revendications 1 à 10.
